(19) Europäisches Patentamt
European Patent Office
Office européen des brevets

(11) **EP 2 574 819 B1**

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(21) Anmeldenummer: **11183451.1**

(22) Anmeldetag: **30.09.2011**

(51) Int Cl.:
*F16F 7/10* (2006.01)     *F16F 15/00* (2006.01)
*B66C 13/06* (2006.01)

(54) **Geschwindigkeitsproportionale aktive Schwingungsdämpfung**

Speed-proportional active oscillation attenuator

Amortisseur d'oscillations actif à vitesse proportionnelle

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.04.2013 Patentblatt 2013/14**

(73) Patentinhaber: **Siemens Aktiengesellschaft 80333 München (DE)**

(72) Erfinder:
• **Ladra, Uwe**
  **91056 Erlangen (DE)**
• **Schäfers, Elmar**
  **90763 Fürth (DE)**
• **Schür, Torsten**
  **91058 Erlangen (DE)**

(56) Entgegenhaltungen:
**EP-A1- 2 023 007     EP-A1- 2 327 651
US-A- 4 083 433**

**Beschreibung**

Die vorliegende Erfindung betrifft ein Betriebsverfahren für einen aktiven Schwingungsdämpfer, der einen auf einer schwingungsfähigen mechanischen Struktur angeordneten elektrischen Direkt-Linearantrieb aufweist, mittels dessen direkt in die schwingungsfähige mechanische Struktur eine Kraft einprägbar ist,

- wobei von einer Steuereinrichtung des aktiven Schwingungsdämpfers anhand einer Absolutbewegung der mechanischen Struktur im Raum eine eine Schwingung der mechanischen Struktur dämpfende Dämpfungskraft ermittelt wird,
- wobei der elektrische Direkt-Linearantrieb von der Steuereinrichtung entsprechend der ermittelten Dämpfungskraft angesteuert wird, so dass mittels des elektrischen Direkt-Linearantriebs die ermittelte Dämpfungskraft in die mechanische Struktur eingeprägt wird.

Die vorliegende Erfindung betrifft weiterhin ein Steuerprogramm, das Maschinencode umfasst, der von einer Steuereinrichtung für einen aktiven Schwingungsdämpfer unmittelbar abarbeitbar ist, wobei die Abarbeitung des Maschinencodes durch die Steuereinrichtung bewirkt, dass die Steuereinrichtung den aktiven Schwingungsdämpfer gemäß einem derartigen Betriebsverfahren betreibt.

Die vorliegende Erfindung betrifft weiterhin eine Steuereinrichtung für einen aktiven Schwingungsdämpfer, wobei die Steuereinrichtung derart ausgebildet oder programmiert ist, dass sie den aktiven Schwingungsdämpfer gemäß einem derartigen Betriebsverfahren betreibt.

Die vorliegende Erfindung betrifft weiterhin einen aktiven Schwingungsdämpfer,

- wobei der aktive Schwingungsdämpfer einen auf einer schwingungsfähigen mechanischen Struktur angeordneten elektrischen Direkt-Linearantrieb aufweist, mittels dessen direkt in die schwingungsfähige mechanische Struktur eine Kraft einprägbar ist,
- wobei der aktive Schwingungsdämpfer Sensoren aufweist, mittels derer eine Absolutbewegung der mechanischen Struktur im Raum erfassbar ist, und
- wobei der aktive Schwingungsdämpfer eine Steuereinrichtung aufweist, die mit den Sensoren zur Entgegennahme der von den Sensoren erfassten Größen datentechnisch und mit dem elektrischen Direkt-Linearantrieb zu dessen Ansteuerung steuerungstechnisch verbunden ist.

Die oben genannten Gegenstände sind beispielsweise aus der EP 2 327 651 A1 bekannt.

Auch aus der US 4 083 433 A ist ein Betriebsverfahren für einen aktiven Schwingungsdämpfer bekannt. Bei diesem Betriebsverfahren wird mittels eines entsprechenden Sensors die Geschwindigkeit der zu dämpfenden Einrichtung relativ zu einem die Einrichtung umgebenden Medium ermittelt. Mittels eines entsprechenden Aktuators wird in die Einrichtung eine geschwindigkeitsproportionale Dämpfungskraft eingebracht.

Die Aufgabe der vorliegenden Erfindung besteht darin, Möglichkeiten zu schaffen, mittels derer auftretende Schwingungen auf effiziente Weise gedämpft und möglichst gleich im Ansatz unterdrückt werden können.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 9.

Erfindungsgemäß ist vorgesehen, ein Betriebsverfahren der eingangs genannten Art dadurch auszugestalten,

- dass die Steuereinrichtung die Dämpfungskraft derart ermittelt, dass sie jederzeit proportional zur momentanen Geschwindigkeit der mechanischen Struktur ist, und
- dass die Steuereinrichtung einen Proportionalitätsfaktor zwischen der momentanen Geschwindigkeit der mechanischen Struktur und der auf die mechanische Struktur ausgeübten Dämpfungskraft selbsttätig derart nachführt, dass eine Eigenschwingung der mechanischen Struktur in vorbestimmter Weise gedämpft wird.

Durch diese Vorgehensweise kann bereits die Anregung einer Schwingung gedämpft werden, auch wenn die Frequenz und die Amplitude der Schwingungsanregung nicht bekannt sind bzw. noch nicht bekannt sind. Weiterhin erfolgt durch diese Vorgehensweise ein selbstadaptierender Betrieb des aktiven Schwingungsdämpfers.

Das Ausmaß, in dem eine sich ergebende Schwingung gedämpft wird, kann nach Bedarf bestimmt sein. Insbesondere ist es möglich, dass eine sich ergebende Dämpfung einer Schwingung der mechanischen Struktur maximal so groß wie die für das Erreichen des aperiodischen Grenzfalls einer Eigenschwingung der mechanischen Struktur erforderliche Grenzdämpfung ist.

Vorzugsweise weist der elektrische Direkt-Linearantrieb einen Stator auf, wobei der Stator mit der mechanischen Struktur fest verbunden ist und einerseits auf die mechanische Struktur und andererseits auf einer relativ zur mechanischen Struktur beweglichen Läufer wirkt.

Prinzipiell ist es ausreichend, anhand der Absolutgeschwindigkeit der mechanischen Struktur die auf die mechanische Struktur auszuübende Dämpfungskraft gemäß der Beziehung

$$m \cdot aD* = FD* = d \cdot v \qquad (1)$$

direkt zu bestimmen. In Gleichung 1 ist m die vom Stator bewegte Masse, aD* ist die Sollbeschleunigung der bewegten Masse. FD* ist die von der beweglichen Masse auf die mechanische Struktur ausgeübte Dämpfungskraft. d ist ein gewünschter, prinzipiell frei wählbarer Dämpfungsfaktor. v ist die Absolutgeschwindigkeit der schwingungsfähigen mechanischen Struktur im Raum. In vielen Fällen führt es jedoch zu besseren Ergebnissen, Gleichung 1 einmal zeitlich zu integrieren, so dass sich die - prinzipiell äquivalente - Beziehung

$$m \cdot vD* = d \cdot x \qquad (2)$$

ergibt. In Gleichung 2 ist vD* die Sollgeschwindigkeit des Läufers relativ zur schwingungsfähigen mechanischen Struktur. x ist die Auslenkung der mechanischen Struktur aus einer Referenzlage. m und d haben die gleiche Bedeutung wie in Gleichung 1.

Die Steuereinrichtung kann also eine Auslenkung der mechanischen Struktur aus einer Referenzlage ermitteln und die zur momentanen Geschwindigkeit der mechanischen Struktur jederzeit proportionale Dämpfungskraft indirekt dadurch ermitteln, dass sie eine Sollgeschwindigkeit des Läufers relativ zur mechanischen Struktur derart ermittelt, dass die Sollgeschwindigkeit jederzeit proportional zur momentanen Auslenkung der mechanischen Struktur aus der Referenzlage ist.

Vorzugsweise ist vorgesehen, dass die Ansteuerung des elektrischen Direkt-Linearantriebs entsprechend der ermittelten Dämpfungskraft in eine überlagerte Lageregelung eingebettet ist, aufgrund derer einer durch die Ansteuerung des elektrischen Direkt-Linearantriebs entsprechend der ermittelten Dämpfungskraft bewirkten Auslenkung der des Läufers aus einer auf die mechanische Struktur bezogenen Ruhelage eine Rückführbewegung überlagert ist, mittels derer der Läufer auf die Ruhelage oder auf einen die Ruhelage enthaltenden Ruhebereich zu verfahren wird und/oder dass das Verfahren des Läufers von der Steuereinrichtung auf einen die Ruhelage enthaltenden zulässigen Verfahrbereich begrenzt wird. Dadurch wird erreicht, dass der Läufer nur innerhalb seines zulässigen Verfahrbereichs verfahren wird.

Gegebenenfalls kann auf dem Läufer des elektrischen Direkt-Linearantriebs eine Zusatzmasse angeordnet sein.

Die Aufgabe wird weiterhin durch ein Steuerprogramm gemäß Anspruch 7 gelöst. Erfindungsgemäß bewirkt die Abarbeitung des Maschinencodes durch die Steuereinrichtung, dass die Steuereinrichtung den aktiven Schwingungsdämpfer gemäß einem erfindungsgemäßen Betriebsverfahren betreibt.

Die Aufgabe wird weiterhin durch eine Steuereinrichtung mit den Merkmalen des Anspruchs 8 gelöst. Erfindungsgemäß ist die Steuereinrichtung derart ausgebildet oder programmiert, dass sie den aktiven Schwingungsdämpfer gemäß einem erfindungsgemäßen Betriebsverfahren betreibt.

Die Aufgabe wird weiterhin durch einen aktiven Schwingungsdämpfer mit den Merkmalen des Anspruchs 9 gelöst. Erfindungsgemäß ist vorgesehen, einen aktiven Schwingungsdämpfer der eingangs genannten Art dadurch auszugestalten, dass die Steuereinrichtung erfindungsgemäß ausgebildet oder programmiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen

FIG 1        eine schwingungsfähige mechanische Struktur und einen aktiven Schwingungsdämpfer,
FIG 2        ein Ansteuerschema,
FIG 3        ein Ablaufdiagramm und
FIG 4 und 5    weitere mögliche Ansteuerschemata.

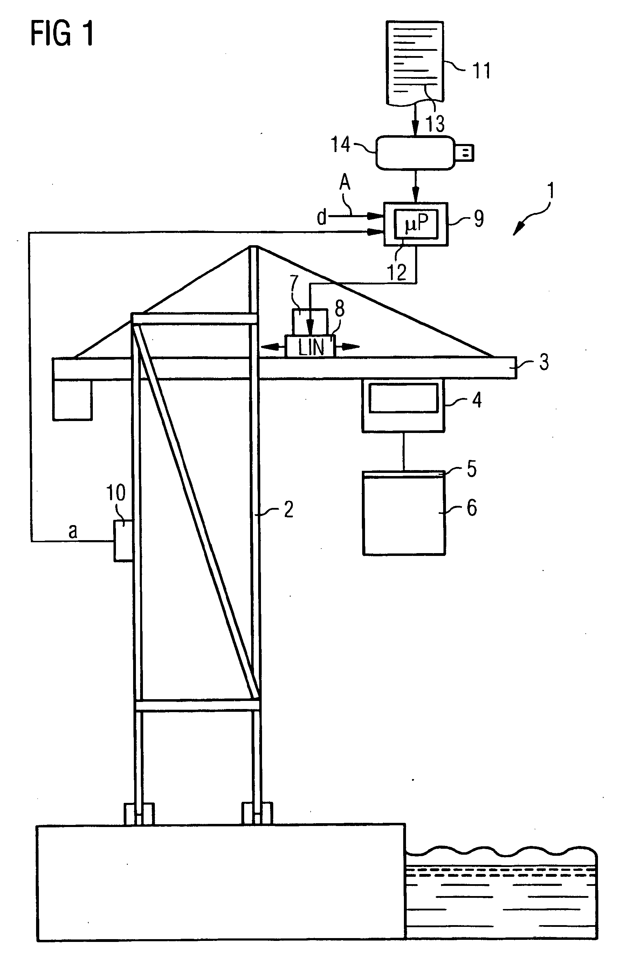

FIG 1 zeigt schematisch einen Containerkran 1. Der Containerkran 1 weist ein Krangestell 2 auf, das seinerseits unter anderem einen Ausleger 3 umfasst. Auf dem Ausleger 3 ist eine Laufkatze 4 verfahrbar. An der Laufkatze 4 ist ein so genannter Spreader 5 ansenkbar und anhebbar angeordnet. Mittels des Spreaders 5 können Container 6 gefasst und umgesetzt werden. Containerkräne 1 wie der in FIG 1 dargestellte Containerkran 1 werden vielfach in Hafenanlagen zum Containerumschlag von Land zu Schiff und umgekehrt eingesetzt.

Insbesondere durch Verfahrbewegungen der Laufkatze 4 können Linearschwingungen des Krangestells 2 angeregt werden, so dass das Krangestell 2 in der Verfahrrichtung der Laufkatze 4 hin und her oszilliert. Die Schwingung ist relativ niederfrequent, typisch unter einem Hertz. Sie kann relativ langhubig sein, beispielsweise bis zu einem Meter betragen. Das Krangestell 2 ist daher eine schwingungsfähige mechanische Struktur 2 im Sinne der vorliegenden Erfindung.

Schwingungen der schwingungsfähigen mechanischen Struktur 2 sollen gedämpft werden. Zu diesem Zweck ist ein aktiver Schwingungsdämpfer vorhanden. Der aktive Schwingungsdämpfer weist eine Dämpfungseinrichtung auf, mittels derer direkt in die schwingungsfähigen Struktur 2 eine Kraft FD* - nachfolgend Dämpfungskraft FD* genannt - einprägbar ist. Die Dämpfungseinrichtung ist auf der schwingungsfähigen Struktur 2 angeordnet. Sie umfasst einen Dämpfungsantrieb 8. Der aktive Schwingungsdämpfer weist weiterhin eine Steuereinrichtung 9 und Sensoren 10 auf.

Der Dämpfungsantrieb 8 ist vorzugsweise als elektrischer Direkt-Linearantrieb ausgebildet. In diesem Fall ist der Stator des Dämpfungsantriebs 8 mit der mechanischen Struktur 2 fest verbunden. Der Stator wirkt einerseits auf die mechanische Struktur 2 und andererseits auf einen relativ zum Stator und damit auch relativ zur mechanischen Struktur 2 beweglichen Läufer des Dämpfungsantriebs 8. Auf dem Läufer kann eine Zusatzmasse 7 angeordnet sein.

Die bewegliche Masse - also die Masse des Läufers zuzüglich der Masse der Zusatzmasse 7 - ist relativ zur schwingungsfähigen mechanischen Struktur 2 bewegbar. Der Dämpfungsantrieb 8 ist auf der schwingungsfähigen mechanischen Struktur 2 angeordnet und mit ihr fest verbunden. Er wirkt auf die bewegliche Masse. Mittels des Dämpfungsantriebs 8 ist die bewegliche Masse relativ zur schwingungsfähigen mechanischen Struktur 2 verfahrbar. Die bewegliche Masse wiederum wirkt nur über den Dämpfungsantrieb 8 auf die mechanische Struktur 2.

Mittels der Sensoren 10 ist eine Absolutbewegung der schwingungsfähigen mechanischen Struktur 2 im Raum erfassbar. Insbesondere kann mittels der Sensoren 10 eine Beschleunigung a schwingungsfähigen mechanischen Struktur 2 erfassbar sein.

Die Steuereinrichtung 9 ist mit den Sensoren 10 zur Entgegennahme der von den Sensoren 6 erfassten Größen a datentechnisch verbunden. Sie ist derart ausgebildet, dass sie den aktiven Schwingungsdämpfer gemäß einem Betriebsverfahren betreibt, das nachfolgend näher erläutert wird.

Die Steuereinrichtung 9 ist in der Regel als softwareprogrammierbare Steuereinrichtung 9 ausgebildet. Die Wirkungsweise der Steuereinrichtung 9 ist daher durch ein Steuerprogramm 11 bestimmt, mit dem die Steuereinrichtung 9 programmiert ist, das also die entsprechende Ausbildung der Steuereinrichtung 9 bewirkt.

Entsprechend der Darstellung von FIG 1 weist die Steuereinrichtung 9 intern in der Regel einen Mikroprozessor 12 auf. Das Steuerprogramm 11 umfasst Maschinencode 13, der von der Steuereinrichtung 9 (genauer: dem Mikroprozessor 12 der Steuereinrichtung 9) unmittelbar abarbeitbar ist. Die Abarbeitung des Maschinencodes 13 bewirkt, dass die Steuereinrichtung 9 den aktiven Schwingungsdämpfer entsprechend dem erfindungsgemäßen Betriebsverfahren betreibt.

Das Steuerprogramm 11 kann der Steuereinrichtung 9 auf beliebige Weise zugeführt werden. Beispielsweise kann das Steuerprogramm 11 in maschinenlesbarer Form - insbesondere in elektronischer Form - auf einem Datenträger 14 gespeichert sein, und der Steuereinrichtung 9 über den Datenträger 14 zugeführt werden. Rein beispielhaft ist der Datenträger 14 gemäß FIG 1 als USB-Memory-Stick ausgebildet. Diese Ausgestaltung kann jedoch ohne Weiteres variiert werden.

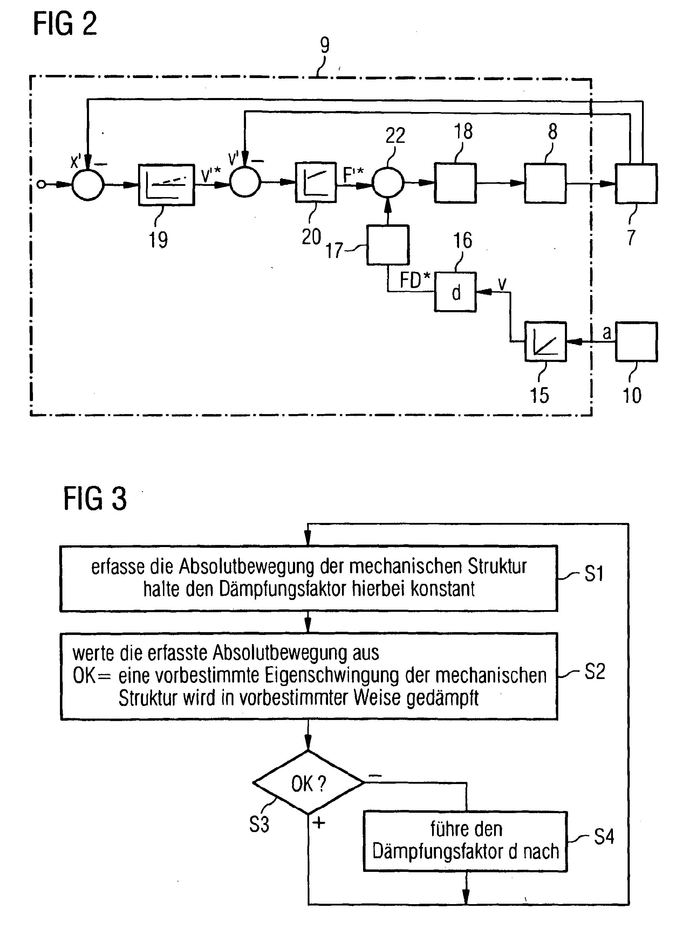

Das erfindungsgemäße Betriebsverfahren wird nachfolgend in Verbindung mit FIG 2 näher erläutert, welche das Grundprinzip der Signalverarbeitung und -aufbereitung zeigt, das die Steuereinrichtung 9 intern ausführt. Zuvor wird noch auf die mathematisch-physikalischen Grundlagen eingegangen.

Wie Fachleuten bekannt ist, kann die (mechanische) Schwingung der schwingungsfähigen mechanischen Struktur 2 durch die Gleichung

$$a + 2d \cdot v + \omega 0^2 x = F \qquad (3)$$

beschrieben werden. x ist hierbei die Auslenkung der mechanischen Struktur 2 aus einer - prinzipiell frei wählbaren - Referenzlage x0. v ist die erste zeitliche Ableitung der Auslenkung x, also die Geschwindigkeit der mechanischen Struktur 2. In analoger Weise ist a die zweite zeitliche Ableitung der Auslenkung x, also die Beschleunigung der mechanischen Struktur 2. $\omega 0$ ist eine Kreiseigenfrequenz, also die mit $2\pi$ multiplizierte Eigenfrequenz einer Eigenschwingung der mechanischen Struktur 2. d ist ein Dämpfungsfaktor. F ist eine äußere Anregung.

Die Größen x, v und a sind zeitabhängig. Die Größen $\omega 0$ und d sind zeitlich konstant. Die äußere Kraft F kann zeitabhängig sein (erzwungene Schwingung) oder konstant sein, insbesondere den Wert 0 aufweisen (freie Schwingung).

Wenn die äußere Anregung F den Wert 0 aufweist, ergeben sich mit dem Ansatz

$$x = A \cdot \exp(\lambda t) \qquad (4)$$

als Lösungen der Differenzialgleichung (3) die - reellen oder komplexen - Werte

$$\lambda_{1/2} = -d \pm \sqrt{d^2 - \omega 0^2} \qquad (5).$$

Je nach Wert der Diskriminante $d^2 - \omega 0^2$ ergibt sich entweder eine "echte" gedämpfte Schwingung ($d < \omega 0$) oder der aperiodische Grenzfall ($d = \omega 0$) oder der Kriechfall ($d > \omega 0$). In jedem Fall jedoch ist die auftretende Dämpfungskraft FD* proportional zur momentanen Geschwindigkeit v der mechanischen Struktur 2.

Die mechanische Struktur 2 selbst - also ohne Berücksichtigung des aktiven Schwingungsdämpfers - weist oftmals nur einen sehr kleinen Dämpfungsfaktor d auf (d/$\omega 0 \ll 1$). Meist liegt der Quotient von Dämpfungsfaktor d zu Eigenkreisfrequenz $\omega 0$ unter 0,1, oftmals sogar unter 0,01. Mittels der erfindungsgemäßen Ansteuerungsweise des aktiven Schwingungsdämpfers, die nachstehend erläutert wird, kann der effektive Dämpfungsfaktor d jedoch deutlich angehoben werden. Er kann sogar so weit angehoben werden, dass die sich ergebende Dämpfung der Schwingung der mechanischen Struktur 2 mindestens so groß wie die für das Erreichen des aperiodischen Grenzfalls der Eigenschwingung der mechanischen Struktur 2 erforderliche Grenzdämpfung ist. Es ist also möglich, den Dämpfungsfaktor d derart zu bestimmen, dass gilt

$$d = \omega 0 \qquad (6).$$

Es ist sogar möglich, den Dämpfungsfaktor d noch größer zu wählen, dass also die Beziehung

$$d > \omega 0 \qquad (7)$$

gilt. Dies ist in der Regel jedoch nicht sinnvoll.

Das hierfür erforderliche Einstellen der Dämpfungskraft FD* geschieht gemäß FIG 2 wie folgt:

Aus den von den Sensoren 10 erfassten Größen a wird die Geschwindigkeit v der mechanischen Struktur 2 ermittelt. Beispielsweise kann im Falle der Erfassung der Beschleunigung a die Beschleunigung a in einem Integrator 15 integriert werden. Das Ausgangssignal des Integrators 15, also die Geschwindigkeit v, wird in einem Multiplizierer 16 mit dem gewünschten Dämpfungsfaktor d multipliziert.

Der Dämpfungsfaktor d kann fest vorgegeben sein. Vorzugsweise ist er jedoch einstellbar.

Das Ausgangssignal des Multiplizierers 16 wird - ggf. nach einer Filterung in einem Filter 17 - als gewünschte Dämpfungskraft FD* einem Kraftregler 18 zugeführt, der seinerseits auf den Dämpfungsantrieb 8 wirkt. Die Steuereinrichtung 9 ist zu diesem Zweck, also zur Ansteuerung des Dämpfungsantriebs 8, mit dem Dämpfungsantrieb 8 steuerungstechnisch verbunden.

Der Dämpfungsantrieb 8 wird somit von der Steuereinrichtung 9 entsprechend der ermittelten Dämpfungskraft FD* angesteuert. Dadurch wird zugleich die bewegliche Masse relativ zur mechanischen Struktur 2 entsprechend verfahren. Da der Dämpfungsantrieb 8 sich an der mechanischen Struktur 2 abstützt und auf die bewegliche Masse wirkt, wird somit direkt der mechanischen Struktur 2 die Dämpfungskraft FD* eingeprägt. Da die Dämpfungskraft FD* aufgrund der obenstehend in Verbindung mit FIG 2 erläuterten Vorgehensweise von der Steuereinrichtung 9 ermittelt wurde, ist die von der beweglichen Masse über den Dämpfungsantrieb 8 auf die mechanische Struktur 2 ausgeübte Dämpfungskraft FD* jederzeit proportional zur momentanen Geschwindigkeit v der mechanischen Struktur 2. Die Schwingung der mechanischen Struktur 2 wird somit entsprechend gedämpft.

Um zu gewährleisten, dass der Läufer nur innerhalb eines zulässigen Verfahrbereichs verfahren wird, kann die bisher erläuterte Struktur von FIG 2 gemäß FIG 2 um einen Lageregler 19 und einen unterlagerten Geschwindigkeitsregler 20 erweitert sein. In diesem Fall ist der Lageregler 19 vorzugsweise als PI-Regler (PI = proportional-integral) ausgebildet, wobei der Integralanteil und in der Regel auch der Proportionalanteil des Lagereglers 19 relativ schwach sind. Der Geschwindigkeitsregler 20 kann beispielsweise als P-Regler oder als PI-Regler ausgebildet sein.

Dem Lageregler 19 wird als Sollgröße ein auf die mechanische Struktur 2 bezogener fester Lagesollwert x'* vorgegeben, der in etwa in der Mitte des zulässigen Verfahrbereichs des Läufers liegen sollte. Als Istwert wird dem Lageregler 19 die Istlage x' des Läufers relativ zur mechanischen Struktur 2 zugeführt.

Der Lageregler 19 ermittelt anhand des Lagesollwerts x'* und der Istlage x' eine Zusatz-Sollgeschwindigkeit v'*, die dem Geschwindigkeitsregler 20 als dessen Sollwert zugeführt wird. Als Istwert wird dem Geschwindigkeitsregler 20 die Istgeschwindigkeit v' des Läufers relativ zur mechanischen Struktur 2 zugeführt. Der Geschwindigkeitsregler 20 ermittelt anhand des Soll-Ist-Vergleichs einen Zusatz-Kraftsollwert F'*, der additiv auf die Dämpfungskraft FD* des Multiplizierers 16 aufgeschaltet wird.

Bei dieser Ausgestaltung ist somit der Ansteuerung des Dämpfungsantriebs 8 entsprechend der Dämpfungskraft FD* die Lageregelung überlagert. Aufgrund der Ausgestaltung des Lagereglers 19 als PI-Regler in Verbindung mit der Vorgabe des festen Lagesollwertes x'* wird der durch die Dämpfungskraft FD* bewirkten Auslenkung des Läufers somit eine Rückführbewegung überlagert, mittels derer der Läufer auf eine Ruhelage zu verfahren wird.

Gegebenenfalls könnte der Lagesollwert x'* auch variiert werden, beispielsweise innerhalb eines die Ruhelage enthaltenden Ruhebereichs, und zwar im Gleichtakt oder im Gegentakt zur tatsächlichen Verfahrbewegung des Läufers bezüglich der mechanischen Struktur 2. Der Ruhebereich ist in diesem Fall ein (in der Regel relativ kleiner) Teilbereich des zulässigen Verfahrbereichs.

Alternativ oder zusätzlich zum Einbetten in die überlagerte Lageregelung könnte die Steuereinrichtung 9 beispielsweise den tatsächlichen Verfahrweg des Läufers erfassen und die Ansteuerung des Dämpfungsantriebs 8 derart modifizieren, dass das Verfahren des Läufers auf den zulässigen Verfahrbereich begrenzt wird.

Der Dämpfungsfaktor d entspricht - unter Vernachlässigung des Faktors 2 in Gleichung 3 - und der etwaigen Filterung im Filter 17 - einem Proportionalitätsfaktor zwischen der momentanen Geschwindigkeit v der mechanischen Struktur 2 und der auf die mechanische Struktur 2 ausgeübten Dämpfungskraft FD*. Es ist möglich, dass der Dämpfungsfaktor d der Steuereinrichtung 9 fest vorgegeben ist, beispielsweise durch das Steuerprogramm 11 als solches bestimmt ist. Vorzugsweise besteht jedoch die Möglichkeit, den Dämpfungsfaktor d der Steuereinrichtung 9 von außen vorzugeben. Dies ist in FIG 1 durch einen mit A bezeichneten Pfeil angedeutet. Insbesondere in dem erläuterten Fall, in dem die Steuereinrichtung 9 zur Ausführung des Betriebsverfahrens das Steuerprogramm 11 abarbeitet, kann somit die Möglichkeit bestehen, dass die Steuereinrichtung 9 den Dämpfungsfaktor d im Rahmen der Abarbeitung des Steuerprogramms 11 als Parameter entgegen nimmt.

Alternativ ist es möglich, dass die Steuereinrichtung 9 den Dämpfungsfaktor d selbsttätig derart nachführt, dass eine Eigenschwingung der mechanischen Struktur in vorbestimmter Weise gedämpft wird. Dies wird nachfolgend in Verbindung mit FIG 3 näher erläutert.

Gemäß FIG 3 erfasst die Steuereinrichtung 9 in einem Schritt S1 während eines längeren Zeitraums die Absolutbewegung der mechanischen Struktur 2. Der Dämpfungsfaktor d wird während dieses Zeitraums konstant gehalten.

In einem Schritt S2 wertet die Steuereinrichtung 9 die erfasste Absolutbewegung (genauer: deren zeitlichen Verlauf) aus. Beispielsweise kann die Steuereinrichtung 9 eine Fourieranalyse vornehmen oder eine Autokorrelationsfunktion ermitteln. Das Ergebnis des Schrittes S2 ist der Wert einer logischen Variable OK. Die logische Variable OK nimmt den Wert WAHR dann und nur dann an, wenn eine vorbestimmte Eigenschwingung der mechanischen Struktur 2 - beispielsweise deren Grundschwingung - in vorbestimmter Weise gedämpft wird. Beispielsweise kann festgelegt sein, dass pro Periode der entsprechenden Eigenschwingung eine Dämpfung um mindestens 50 % (oder 70 % oder ein anderer geeigneter Wert) auftritt.

In einem Schritt S3 prüft die Steuereinrichtung 9 den Wert der logischen Variable OK. Wenn die logische Variable OK den Wert WAHR aufweist, werden keine weiteren Maßnahmen ergriffen. Anderenfalls führt die Steuereinrichtung 9 in einem Schritt S4 den Dämpfungsfaktor d derart nach, dass die entsprechende Eigenschwingung in der gewünschten Weise gedämpft wird.

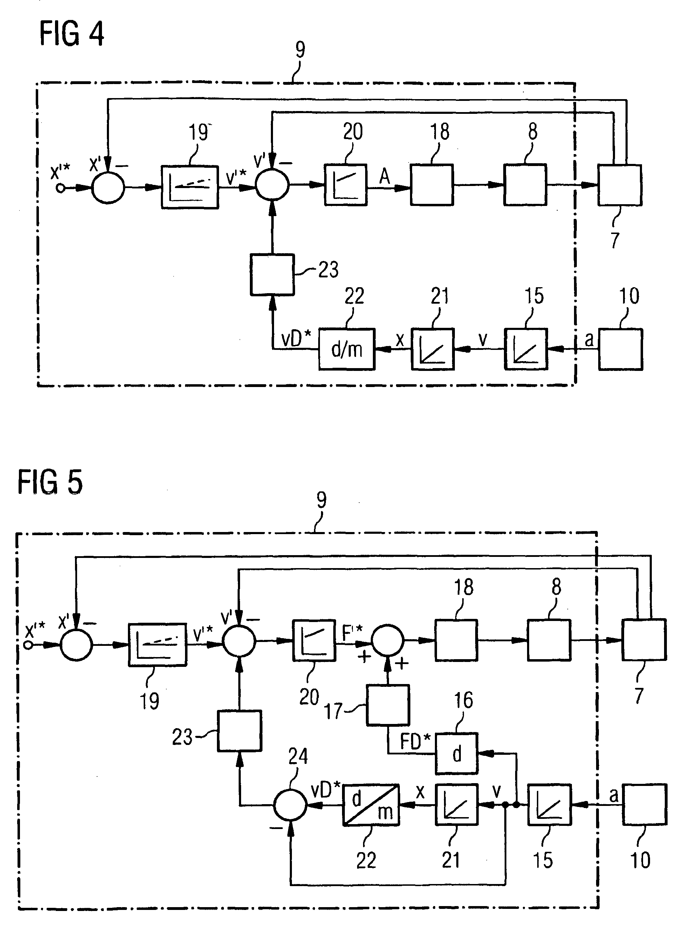

Es ist möglich, dass die bisher erläuterte Vorgehensweise bereits zu hinreichend guten Ergebnissen führt. Es ist jedoch ebenso möglich, dass im Falle der Vorgehensweise gemäß FIG 2 der Dämpfungsantrieb 8 zwar mit der entsprechenden Dämpfungskraft FD* beaufschlagt wird, die tatsächlich von der beweglichen Masse bewirkte Dämpfungskraft jedoch darunter liegt oder deutlich schwankt. Eine Ursache hierfür können beispielsweise Reibungsverluste im Dämpfungsantrieb 8 oder ein zu hohes Haftvermögen des Läufers sein. Besonders stark treten die genannten Effekte bei relativ kleinen Dämpfungskräften FD* in Verbindung mit einer relativ großen Haftreibung des Läufers auf. In vielen Fällen ist es daher von Vorteil, die Vorgehensweise von FIG 2 entsprechend FIG 4 zu modifizieren.

Gemäß FIG 4 wird die Geschwindigkeit v der mechanischen Struktur 2 in einem weiteren Integrator 21 integriert und so die Auslenkung x der mechanischen Struktur 2 aus der Referenzlage x0 ermittelt. Die Auslenkung x wird in einem Multiplizierer 22 mit dem Faktor d/m multipliziert, wobei d der gewünschte Dämpfungsfaktor und m die Masse der beweglichen Masse sind. Gegebenenfalls erfolgt in einem Filter 23 eine Filterung. Der so ermittelte Wert entspricht einer Sollgeschwindigkeit vD* des Läufers relativ zur mechanischen Struktur 2. Er wird dem Geschwindigkeitsregler 20 als Kompensationssollwert zugeführt.

Mathematisch entspricht die Vorgehensweise von FIG 2 der Vorgehensweise von FIG 4, wobei jedoch eine einmalige zeitliche Integration erfolgt ist. Denn gemäß FIG 2 wird die Dämpfungskraft FD* ermittelt durch die Beziehung

$$FD^* = d \cdot v \qquad (8).$$

Die Dämpfungskraft FD* entspricht jedoch zugleich dem Produkt von Masse m der beweglichen Masse und der Beschleunigung a' der beweglichen Masse:

$$FD^* = m \cdot aD^* \qquad (9).$$

Einsetzen von Gleichung 9 in Gleichung 8 nebst beidseitiger einmaliger zeitlicher Integration ergibt somit die Beziehung

$$m \cdot vD^* = d \cdot x \qquad (10).$$

Die Vorgehensweise gemäß FIG 4 setzt diese Beziehung in eine regelungstechnische Realisierung um.

Bei der Vorgehensweise von FIG 4 wird die Dämpfungskraft FD* somit indirekt dadurch ermittelt, dass die Steuereinrichtung 9 die Sollgeschwindigkeit vD* der beweglichen Masse relativ zur mechanischen Struktur 2 ermittelt, wobei die Sollgeschwindigkeit vD* jederzeit proportional zur momentanen Auslenkung x der mechanischen Struktur 2 aus der Referenzlage x0 ist.

Es sind auch Kombinationen der Vorgehensweisen von FIG 2 und FIG 4 möglich. Dies ist in FIG 5 dargestellt. Gegebenenfalls kann hierbei zusätzlich die Geschwindigkeit v der mechanischen Struktur 2 in einem Knotenpunkt 24 mit negativem Vorzeichen aufgeschaltet werden.

Die zu dämpfende Schwingung kann entsprechend dem Beispiel von FIG 1 eine translatorische Schwingung sein. Alternativ kommen eine Torsionsschwingung oder eine Drehschwingung in Frage. Der Dämpfungsantrieb 8 kann in derartigen Fällen als rotatorischer Antrieb ausgebildet sein. Insbesondere im Falle eine langgestreckten mechanischen Struktur 2 und einer Schwingung der mechanischen Struktur 2 in dieser Längsrichtung ist es jedoch von Vorteil, wenn der Dämpfungsantrieb 8, wie bereits erwähnt, entsprechend der Bezeichnung "LIN" in FIG 1 als elektrischer Direkt-Linearantrieb ausgebildet ist.

Die vorliegende Erfindung weist viele Vorteile auf. Insbesondere ist auf einfache Weise eine hocheffiziente Dämpfung nahezu beliebiger Schwingungen möglich.

Obwohl die Erfindung im Detail durch das bevorzugte Ausführungsbeispiel näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

**Patentansprüche**

1. Betriebsverfahren für einen aktiven Schwingungsdämpfer, der einen auf einer schwingungsfähigen mechanischen Struktur (2) angeordneten elektrischen Direkt-Linearantrieb (8) aufweist, mittels dessen direkt in die schwingungsfähige mechanische Struktur (2) eine Kraft (FD*) einprägbar ist,

   - wobei von einer Steuereinrichtung (9) des aktiven Schwingungsdämpfers anhand einer Absolutbewegung der mechanischen Struktur (2) im Raum eine eine Schwingung der mechanischen Struktur (2) dämpfende Dämpfungskraft (FD*) ermittelt wird,
   - wobei der elektrische Direkt-Linearantrieb (8) von der Steuereinrichtung (9) entsprechend der ermittelten Dämpfungskraft (FD*) angesteuert wird, so dass mittels des elektrischen Direkt-Linearantriebs (8) die ermittelte Dämpfungskraft (FD*) in die mechanische Struktur (2) eingeprägt wird,
   - wobei die Steuereinrichtung (9) die Dämpfungskraft (FD*) derart ermittelt, dass sie jederzeit proportional zur momentanen Geschwindigkeit (v) der mechanischen Struktur (2) ist,
   - wobei die Steuereinrichtung (9) einen Proportionalitätsfaktor (d) zwischen der momentanen Geschwindigkeit (v) der mechanischen Struktur (2) und der auf die mechanische Struktur (2) ausgeübten Dämpfungskraft (FD*) selbsttätig derart nachführt, dass eine Eigenschwingung der mechanischen Struktur (2) in vorbestimmter Weise gedämpft wird.

2. Betriebsverfahren nach Anspruch 1,
**dadurch gekennzeichnet, dass** eine sich ergebende Dämpfung einer Schwingung der mechanischen Struktur (2) höchstens so groß wie die für das Erreichen des aperiodischen Grenzfalls einer Eigenschwingung der mechanischen Struktur (2) erforderliche Grenzdämpfung ist.

3. Betriebsverfahren nach Anspruch 1 oder 2,
**dadurch gekennzeichnet, dass** der elektrische Direkt-Linearantrieb einen mit der mechanischen Struktur (2) fest verbundenen Stator aufweist und dass der Stator einerseits auf die mechanische Struktur (2) und andererseits auf einen relativ zur mechanischen Struktur (2) beweglichen Läufer wirkt.

4. Betriebsverfahren nach Anspruch 3,
**dadurch gekennzeichnet, dass** die Steuereinrichtung (9) eine Auslenkung (x) der mechanischen Struktur (2) aus einer Referenzlage ermittelt und die zur momentanen Geschwindigkeit (v) der mechanischen Struktur (2) jederzeit proportionale Dämpfungskraft (FD*) indirekt dadurch ermittelt, dass sie eine Sollgeschwindigkeit (vD*) des Läufers relativ zur mechanischen Struktur (2) derart ermittelt, dass die Sollgeschwindigkeit (vD*) jederzeit proportional zur momentanen Auslenkung (x) der mechanischen Struktur (2) aus der Referenzlage ist.

5. Betriebsverfahren nach Anspruch 3 oder 4,
**dadurch gekennzeichnet, dass** die Ansteuerung des elektrischen Direkt-Linearantriebs (8) entsprechend der ermittelten Dämpfungskraft (FD*) in eine überlagerte Lageregelung eingebettet ist, aufgrund derer einer durch die Ansteuerung des elektrischen Direkt-Linearantriebs (8) entsprechend der ermittelten Dämpfungskraft (FD*) bewirkten Auslenkung des Läufers aus einer auf die mechanische Struktur (2) bezogenen Ruhelage eine Rückführbewegung überlagert ist, mittels derer der Läufer auf die Ruhelage oder auf einen die Ruhelage enthaltenden Ruhebereich zu verfahren wird und/oder dass das Verfahren des Läufers von der Steuereinrichtung (9) auf einen die Ruhelage enthaltenden zulässigen Verfahrbereich begrenzt wird.

6. Betriebsverfahren nach Anspruch 3, 4 oder 5,
**dadurch gekennzeichnet, dass** auf dem Läufer des elektrischen Direkt-Linearantriebs (8) eine Zusatzmasse (7) angeordnet ist.

7. Steuerprogramm, das Maschinencode (13) umfasst, der von einer Steuereinrichtung (9) für einen aktiven Schwingungsdämpfer unmittelbar abarbeitbar ist, wobei die Abarbeitung des Maschinencodes (13) durch die Steuereinrichtung (9) bewirkt, dass die Steuereinrichtung (9) den aktiven Schwingungsdämpfer gemäß einem Betriebsverfahren mit allen Schritten eines Betriebsverfahrens nach einem der obigen Ansprüche betreibt.

8. Steuereinrichtung für einen aktiven Schwingungsdämpfer, wobei die Steuereinrichtung derart ausgebildet oder programmiert ist, dass sie den aktiven Schwingungsdämpfer gemäß einem Betriebsverfahren mit allen Schritten eines Betriebsverfahrens nach einem der Ansprüche 1 bis 6 betreibt.

9. Aktiver Schwingungsdämpfer,

- wobei der aktive Schwingungsdämpfer eine auf einer schwingungsfähigen mechanischen Struktur (2) angeordneten elektrischen Direkt-Linearantrieb (8) aufweist, mittels dessen direkt in die schwingungsfähige mechanische Struktur (2) eine Kraft (FD*) einprägbar ist,
- wobei der aktive Schwingungsdämpfer Sensoren (10) aufweist, mittels derer eine Absolutbewegung der mechanischen Struktur (2) im Raum erfassbar ist, und
- wobei der aktive Schwingungsdämpfer eine Steuereinrichtung (9) aufweist, die gemäß Anspruch 8 ausgebildet oder programmiert ist und mit den Sensoren (10) zur Entgegennahme der von den Sensoren (10) erfassten Größen (a) datentechnisch und mit dem elektrischen Direkt-Linearantrieb (8) zu dessen Ansteuerung steuerungstechnisch verbunden ist.

**Claims**

1. Operating method for an active vibration damper comprising an electric direct linear drive (8) which is arranged on a vibration-susceptible mechanical structure (2) and by means of which a force (FD*) can be injected directly into the vibration-susceptible mechanical structure (2),

- wherein a damping force (FD*) which damps a vibration of the mechanical structure (2) is determined by means of a control device (9) of the active vibration damper with reference to an absolute movement of the mechanical structure (2) in space,
- wherein the electric direct linear drive (8) is activated by the control device (9) in accordance with the determined damping force (FD*) such that the determined damping force (FD*) is injected into the mechanical structure (2) by means of the electric direct linear drive (8),
- wherein the control device (9) determines the damping force (FD*) in such a way that it is proportional at all times to the momentary velocity (v) of the mechanical structure (2),
- wherein the control device (9) automatically tracks a proportionality factor (d) between the momentary velocity (v) of the mechanical structure (2) and the damping force (FD*) that is exerted on the mechanical structure (2) such that a natural vibration of the mechanical structure (2) is damped in a predefined manner.

2. Operating method according to claim 1,
   **characterised in that** a resulting damping of a vibration of the mechanical structure (2) is no greater than the maximal damping that is required in order to match the non-periodic extreme case of a natural vibration of the mechanical structure (2).

3. Operating method according to claim 1 or 2,
   **characterised in that** the electric direct linear drive has a stator, said stator being permanently connected to the mechanical structure (2) and acting both on the mechanical structure (2) and on an armature that is mobile relative to the mechanical structure (2).

4. Operating method according to claim 3,
   **characterised in that** the control device (9) determines a displacement (x) of the mechanical structure (2) from a reference location, and indirectly determines the damping force (FD*) that is proportional at all times to the momentary velocity (v) of the mechanical structure (2) by determining a reference velocity (vD*) of the armature relative to the mechanical structure (2) in such a way that the reference velocity (vD*) is proportional at all times to the momentary displacement (x) of the mechanical structure (2) from the reference location.

5. Operating method according to claim 3 or 4,
   **characterised in that** the activation of the electric direct linear drive (8) according to the determined damping force (FD*) is integrated into a superordinate location regulation, whereby a displacement of the armature from a rest location relative to the mechanical structure (2), this being is effected by the activation of the electric direct linear drive (8) according to the determined damping force (FD*), is superimposed by a return movement by means of which the armature is moved to the rest location or to a rest region containing the rest location and/or for the travel of the armature to be limited by the control device (9) to a permitted region of travel containing the rest location.

6. Operating method according to claim 3, 4 or 5,
   **characterised in that** an additional mass (7) is arranged on the armature of the electric direct linear drive (8).

7. Control program comprising machine code (13) that can be executed directly by a control device (9) for an active vibration damper, wherein the execution of the machine code (13) by the control device (9) causes the control device (9) to operate the active vibration damper in accordance with an operating method having all of the steps of an operating method as claimed in one of the preceding claims.

8. Control device for an active vibration damper, wherein the control device is so designed or programmed as to operate the active vibration damper in accordance with an operating method having all of the steps of an operating method according to one of the claims 1 to 6.

9. Active vibration damper,

   - wherein the active vibration damper features an electric direct linear drive (8) which is arranged on a vibration-susceptible mechanical structure (2) and by means of which a force (FD*) can be injected directly into the vibration-susceptible structure (2),
   - wherein the active vibration damper features sensors (10) by means of which an absolute movement of the mechanical structure (2) in space can be captured, and
- wherein the active vibration damper features a control device (9) which is designed or programmed according to claim 8 and has a data connection to the sensors (10), for the purpose of receiving variables (a) that are captured by the sensors (10), and a control connection to the electric direct linear drive (8), for the purpose of activating said electric direct linear drive (8).

**Revendications**

1.  Procédé pour faire fonctionner un amortisseur actif d'oscillations, ayant un entraînement ( 8 ) linéaire direct électrique, qui est monté sur une structure ( 2 ) mécanique susceptible d'osciller et au moyen duquel une force ( FD* ) peut être appliquée directement à la structure ( 2 ) mécanique susceptible d'osciller,

    - dans lequel on détermine par un dispositif ( 9 ) de commande de l'amortisseur actif d'oscillations, au moyen d'un déplacement absolu de la structure de mécanique dans l'espace, une force ( FD* ) d'amortissement amortissant une oscillation de la structure ( 2 ) mécanique,
    - dans lequel on commande l'entraînement ( 8 ) linéaire direct électrique par le dispositif ( 9 ) de commande en fonction de la force ( FD* ) d'amortissement déterminée de manière à appliquer au moyen de l'entraînement ( 8 ) linéaire direct électrique la force ( FD* ) d'amortissement déterminée à la structure ( 2 ) mécanique,
    - dans lequel le dispositif ( 9 ) de commande détermine la force ( FD* ) d'amortissement de manière à ce qu'elle soit à tout instant proportionnelle à la vitesse ( v ) instantanée de la structure ( 2 ) mécanique,
    - dans lequel le dispositif ( 9 ) de commande adapte automatiquement un facteur ( d ) de proportionnalité entre la vitesse ( v ) instantanée de la structure ( 2 ) mécanique et la force ( FD* ) d'amortissement appliquée à la structure ( 2 ) mécanique de manière à amortir d'une façon déterminée à l'avance une oscillation propre de la structure ( 2 ) mécanique.

2.  Procédé selon la revendication 1, **caractérisé en ce qu'**un amortissement obtenu d'une oscillation de la structure ( 2 ) mécanique est au plus aussi grande que l'amortissement limite nécessaire pour obtenir le cas limite apériodique d'une oscillation propre de la structure ( 2 ) mécanique.

3.  Procédé selon la revendication 1 ou 2, **caractérisé en ce que** l'entraînement linéaire direct électrique a un stator solidaire de la structure ( 2 ) mécanique et **en ce que** le stator agit d'une part sur la structure ( 2 ) mécanique et d'autre part sur un rotor mobile par rapport à la structure ( 2 ) mécanique.

4.  Procédé selon la revendication 3, **caractérisé en ce que** le dispositif ( 9 ) de commande détermine une excursion ( x ) de la structure ( 2 ) mécanique d'une position de référence et détermine indirectement la force ( FD* ) d'amortissement proportionnelle à tout instant à la vitesse ( v ) instantanée de la structure ( 2 ) mécanique en déterminant une vitesse ( vD* ) de consigne du rotor par rapport à la structure ( 2 ) mécanique de manière à ce que la vitesse ( vD* ) de consigne soit à tout instant proportionnelle à l'excursion ( x ) instantanée de la structure ( 2 ) mécanique de la position de référence.

5.  Procédé selon la revendication 3 ou 4, **caractérisé en ce que** la commande de l'entraînement ( 8 ) linéaire direct électrique en fonction de la force ( FD* ) d'amortissement déterminée est incorporée dans une régulation de position superposée, sur la base de laquelle un mouvement de retour est superposé à une excursion du rotor d'une position de repos rapportée à la structure ( 2 ) mécanique provoquée par la commande de l'entraînement ( 8 ) linéaire direct électrique en fonction de la force ( FD* ) d'amortissement déterminé, mouvement de retour au moyen duquel le rotor est déplacé vers la position de repos ou vers une plage de repos contenant la position de repos, et/ou **en ce que** le déplacement du rotor est limité par le dispositif ( 9 ) de commande à une plage de déplacement admissible contenant la position de repos.

6.  Procédé selon la revendication 3, 4 ou 5, **caractérisé en ce qu'**une masselotte ( 7 ) supplémentaire est disposée sur le rotor de l'entraînement ( 8 ) linaire direct électrique.

7.  Programme de commande, qui comprend un code ( 13 ) machine, qui peut se dérouler directement sous l'effet d'un dispositif ( 9 ) de commande d'un amortisseur actif d'oscillations, le déroulement du code machine ( 13 ) étant provoqué par le dispositif ( 9 ) de commande de façon à ce que le dispositif ( 9 ) de commande fasse fonctionner l'amortisseur actif d'oscillations suivant un procédé de fonctionnement ayant tous les stades d'un procédé de fonctionnement selon les revendications précédentes.

**8.** Dispositif de commande d'un amortisseur actif d'oscillations, le dispositif de commande étant constitué ou programmé de manière à faire fonctionner l'amortisseur actif d'oscillations suivant un procédé de fonctionnement ayant tous les stades d'un procédé de fonctionnement selon l'une des revendications 1 à 6.

**9.** Amortisseur actif d'oscillations,

- dans lequel l'amortisseur actif d'oscillations a un entraînement ( 8 ) linéaire direct électrique, qui est monté sur une structure ( 2 ) mécanique susceptible d'osciller et au moyen duquel une force ( FD* ) peut être appliquée directement à la structure ( 2 ) mécanique susceptible d'osciller,
- dans lequel l'amortisseur actif d'oscillations a des capteurs ( 10 ) au moyen desquels un déplacement absolu de la structure ( 2 ) mécanique dans l'espace peut être détecté, et
- dans lequel l'amortisseur actif d'oscillations a un dispositif ( 9 ) de commande, qui est constitué ou programmé suivant la revendication 8 et qui est relié informatiquement aux capteurs ( 10 ) pour la réception des grandeurs ( a ) détectées par les capteurs ( 10 ) et en technique de commande à l'entraînement ( 8 ) linéaire direct électrique pour sa commande.

# FIG 1

FIG 2

FIG 3

| erfasse die Absolutbewegung der mechanischen Struktur halte den Dämpfungsfaktor hierbei konstant | S1 |

| werte die erfasste Absolutbewegung aus OK= eine vorbestimmte Eigenschwingung der mechanischen Struktur wird in vorbestimmter Weise gedämpft | S2 |

OK ?   S3   −   +

| führe den Dämpfungsfaktor d nach | S4 |

# FIG 4

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2327651 A1
- US 4083433 A